# EUROPÄISCHE PATENTANMELDUNG

(11) **EP 1 001 229 A2**
(43) Veröffentlichungstag der Anmeldung: **17.05.2000**
(21) Anmeldenummer: 99122508.7
(22) Anmeldetag: 11.11.1999
(51) Int. Cl.: F25B 41/06, B60H 1/00

(54) **Expansionsorgan und hierfür verwendbare ventileinheit**

(30) Priorität: 12.11.1998 DE 19852127
(71) Anmelder: FORD-WERKE AKTIENGESELLSCHAFT, 50725 Köln (DE)
(72) Erfinder: Hinrichs, Jan, Dr., 61381 Friedrichsdorf (DE); Seipel, Volker, 64625 Bensheim (DE); Van Doan, Nguyen, 61267 Neu-Anspach (DE); Dienhart, Bernd, Dr., 50935 Köln (DE); Walter, Christoph, 70376 Stuttgart (DE); Staffa, Karl-Heinz, 70567 Stuttgart (DE); Mittelstrass, Hagen, 71149 Bondorf (DE); Krauss, Hans-Joachim, 71665 Vaihingen (DE)
(74) Vertreter: Drömer, Hans-Carsten, Dipl.-Ing.

(57) **Zusammenfassung**

Expansionsorgan mit einer Festdrossel (2,8,31), einem in einer die Festdrossel (2,8,31) umgehenden Bypassleitung (6,28,36) angeordneten Überdruckventil (3,27,35) und einem mechanischen oder thermischen Regelventil (9,17,37), wobei alle Ventilkomponenten in ein gemeinsames Ventilgehäuse (1,25,30) integriert sind.

Verwendung des Expansionsorgans für CO₂-Klimaanlagen von Kraftfahrzeugen.

## Beschreibung

Die Erfindung bezieht sich auf ein Expansionsorgan für eine Klimaanlage und auf eine insbesondere für ein solches Expansionsorgan verwendbare Ventileinheit mit einer Festdrossel zwischen einer stromaufwärtigen Ventilhochdruckseite und einer stromabwärtigen Ventilniederdruckseite.

Klimaanlagen, wie sie beispielsweise in Kraftfahrzeugen verwendet werden, beinhalten herkömmlicherweise einen Kältemittelkreislauf, der einerseits durch einen Kompressor und andererseits durch ein Expansionsorgan in eine Kältemittel-Hochdruckseite und eine Kältemittel-Niederdruckseite aufgeteilt ist. Zwischen dem Kompressor und dem Expansionsorgan befindet sich hochdruckseitig ein Wärmeübertrager zur Kühlung des Kältemittels, der je nachdem, ob das Kältemittel hochdruckseitig im unter- oder überkritischen Bereich betrieben wird, als Kondensator oder Gaskühler fungiert. Niederdruckseitig befindet sich zwischen Expansionsorgan und Kompressor ein Verdampfer, über den ein zu kühlender Luftstrom hinweggeführt wird. Herkömmliche Expansionsorgane beinhalten meist ein Regelventil, das den Durchtrittsquerschnitt des Expansionsorgans in Abhängigkeit von einer einwirkenden Stellgröße variabel einstellt. Typischerweise wird dabei die Überhitzung des Kältemittels nach Verdampfer durch Beeinflussung des Kältemittelmassenstromes geregelt. So ist in der Offenlegungsschrift EP 0 438 625 A2 ein Expansionsorgan mit einem Regelventil beschrieben, bei dem die niederdruckseitige Kältemitteltemperatur nach Verdampfer als Stellgröße dient.

In der Offenlegungsschrift EP 0 701 096 A2 ist eine vorzugsweise mit CO₂ als Kältemittel arbeitende Fahrzeugklimaanlage offenbart, bei der als Expansionsorgan entweder eine Festdrossel oder ein Regelventil vorgesehen ist. Bei Einsatz des Regelventils wird eine sogenannte COP-Regelung der CO₂-Klimaanlage angestrebt, bei welcher die Leistungskennzahl COP, definiert als das Verhältnis von erbrachter Kühlleistung zu aufgewendeter Leistung, möglichst im Bereich eines Maximums gehalten wird, das die Leistungskennzahl COP in Abhängigkeit vom Kältemitteldruck auf der Hochdruckseite annimmt. Dazu wird die Einstellung des Regelventils mit der Regelung eines durchsatzregelbaren Kompressors korreliert, bei welcher der Kältemittelmassenstrom durch Regulierung des Kältemitteldurchsatzes im Kompressor variiert wird.

In der Offenlegungsschrift EP 0 786 632 A2 ist eine CO₂-Klimaanlage mit einem Expansionsorgan offenbart, das ein Regelventil beinhaltet, das vom hochdruckseitigen Kältemitteldruck beaufschlagt wird, wobei als effektive Stellgröße der auf eine bewegliche Membran wirkende Differenzdruck zwischen dem hochdruckseitigen Kältemitteldruck und dem Druck in einer geschlossenen, mit Kältemittel befüllten und mit dem vorbeiströmenden hochdruckseitigen Kältemittel in Wärmekontakt stehenden Kammer fungiert. Auf diese Weise ist der hochdruckseitige Kältemitteldruck längs einer Kurve veränderbar, die im überkritischen Gebiet einer Linie konstanter Kältemitteldichte entspricht, womit wiederum die Leistungskennzahl. COP maximal gehalten werden soll.

Der Erfindung liegt als technisches Problem die Bereitstellung einer neuartigen Ventileinheit, die bei Einsatz in einem Expansionsorgan für eine hochdruckseitig auch in den überkritischen Bereich des eingesetzten Kältemittels gelangende Klimaanlage, insbesondere eine CO₂-Klimaanlage, eine vergleichsweise zuverlässige und energieoptimale Regelung des Kältemittelkreislaufs mit relativ geringem Aufwand ermöglicht, sowie eines neuartigen Expansionsorgans zugrunde, mit dem sich insbesondere auch eine CO₂-Klimaanlage vergleichsweise einfach und zuverlässig regeln läßt.

Die Erfindung löst dieses Problem durch die Bereitstellung einer Ventileinheit mit den Merkmalen des Anspruchs 1 sowie eines Expansionsorgans mit den Merkmalen des Anspruchs 9 oder 10.

Die Ventileinheit nach Anspruch 1 beinhaltet charakteristischerweise eine Festdrossel zwischen Ventilhochdruckseite und Ventilniederdruckseite sowie mindestens eine weitere Ventilkomponente in Form eines Überdruckventils, das in einer die Festdrossel umgehenden Bypassleitung angeordnet ist, oder eines den Durchtrittsquerschnitt der Festdrossel beeinflussenden Regelventils.

Die kombinierte Anordnung von Festdrossel und Überdruckventil eignet sich als vergleichsweise einfach realisierbares Expansionsorgan gerade auch einer hochdruckseitig mindestens in bestimmten Betriebssituationen überkritisch betriebenen CO₂-Klimaanlage. Die Festdrossel erspart den mit einem Regelventil verknüpften Regelungsaufwand und ermöglicht dennoch dank ihrer druckabhängigen Drosselcharakteristik in gewissem Umfang eine Hochdruckregulierung. Das vom hochdruckseitigen Kältemitteldruck beaufschlagte Überdruckventil sorgt für eine Sicherheits-Hochdruckbegrenzung und ist vorteilhafterweise in einer zugehörigen Bypassleitung angeordnet, so daß es die Kältemittelströmung durch die Festdrossel hindurch völlig unbeeinflußt läßt.

Die Verwendung eines den Durchtrittsquerschnitt der Festdrossel beeinflussenden Regelventils ermöglicht bei Bedarf eine gegenüber der alleinigen Verwendung einer ungeregelten Festdrossel verfeinerte Regelung der Klimaanlage. Dennoch bleibt auch in diesem Fall der Realisierungs- und Regelungsaufwand deutlich geringer als bei Verwendung der herkömmlichen Expansionsorgan-Regelventile ohne Festdrosselteil und mit zum Teil externer Ansteuerung.

Eine nach Anspruch 2 weitergebildete Ventileinheit weist eine zweite, zur ersten parallel geschaltete Festdrossel auf. Die beiden Festdrosseln sind vorzugsweise unterschiedlich ausgelegt, so daß bei Verwendung in einem Expansionsorgan gegenüber dem Fall einer alleinigen Festdrossel eine zweistufige und damit entsprechend verfeinerte Regelung eines Kältemittelkreislaufs möglich ist. In weiterer Ausgestaltung weist gemäß Anspruch 3 die Ventileinheit neben den beiden parallelen Festdrosseln sowohl ein Überdruckventil in einer die Festdrosselanordnung umgehenden Bypassleitung als auch ein den Durchtrittsquerschnitt einer der Festdrosseln beeinflussendes Regelventil auf. Dies ermöglicht eine besonders feinfühlige Regelung eines Kältemittelkreislaufs noch immer ohne den Realisierungs- und Regelungsaufwand eines herkömmlichen ExpansionsorganRegelventilkomplexes. Denn durch das Vorhandensein der Festdrosseln kann das hier verwendete Regelventil relativ einfach gebaut sein, und es braucht nur eine vergleichsweise einfache Regelungsfunktion zu erfüllen.

Bei einer nach Anspruch 4 weitergebildeten Ventileinheit sind sämtliche Ventilkomponenten vorteilhafterweise in ein gemeinsames Ventilgehäuse integriert, so daß sich die Ventileinheit mit den mehreren Ventilkomponenten als einheitliche, kompakte Baueinheit realisieren läßt.

Bei einer nach Anspruch 5 weitergebildeten Ventileinheit ist ein den Durchtrittsquerschnitt einer Festdrossel beeinflussendes, mechanisches Regelventil vorgesehen, das vom Druck des Mediums auf der Niederdruckseite als Stellgröße beaufschlagt wird. Dies ermöglicht bei Einsatz der Ventileinheit in einem Expansionsorgan eine einfache Kältemittelhochdruckregelung mit dem niederdruckseitigen Kältemitteldruck, auch Saugdruck genannt, als Stellgröße.

Bei einer nach Anspruch 6 weitergebildeten Ventileinheit ist ein den Durchtrittsquerschnitt einer Festdrossel beeinflussendes thermisches Regelventil vorgesehen, das von der auf der Niederdruckseite herrschenden Temperatur als Stellgröße beaufschlagt wird. Dies ermöglicht bei Einsatz der Ventileinheit in einem Expansionsorgan einer Klimaanlage eine Kältemittelhochdruckregelung mit der niederdruckseitigen Kältemitteltemperatur, auch Sauggastemperatur genannt, als Stellgröße.

Bei einer nach Anspruch 7 weitergebildeten Ventileinheit ist ein den Durchtrittsquerschnitt einer Festdrossel beeinflussendes thermisches Regelventil vorgesehen, dem eine Heizung zugeordnet ist, über die es durch eine zugehörige Heizungseingangsgröße als Stellgröße ansteuerbar ist. Bei dieser Stellgröße kann es sich z.B. bei Einsatz der Ventileinheit in einem Expansionsorgan einer Fahrzeugklimaanlage um ein von der Umgebungstemperatur oder der Drehzahl eines auch den Klimaanlagenkompressor antreibenden Kraftfahrzeugmotors abhängiges elektrisches Heizstromsignal handeln. Zusätzlich kann das thermische Regelventil auch von der niederdruckseitigen Kältemitteltemperatur beeinflußt sein.

Bei einer nach Anspruch 8 weitergebildeten Ventileinheit ist die Niederdruckseite des von einer niederdruckseitigen physikalischen Größe beeinflußbaren, auf eine Festdrossel wirkenden Regelventils über eine ventilgehäuseinterne Verbindungsleitung direkt mit der Niederdruckseite der Festdrossel verbunden. Damit wird die Beeinflussung des Regelventils durch die Niederdruckseite bereits in der Ventileinheit selbst realisiert und braucht nicht mehr extern bewirkt zu werden, so daß für die Ventileinheit ein einziger Niederdruckanschluß ausreicht.

Das Expansionsorgan nach Anspruch 9 beinhaltet charakteristischerweise ein mechanisches Regelventil, das vom niederdruckseitigen Kältemitteldruck als Stellgröße beaufschlagt wird. Damit wird eine Kältemittelhochdruckregelung mit dem niederdruckseitigen Kältemitteldruck vor oder nach Verdampfer ermöglicht, wie sie sich gerade auch für CO₂-Klimaanlagen von Kraftfahrzeugen als einerseits relativ wenig aufwendig und andererseits vergleichsweise zuverlässig und energieverbrauchsgünstig herausstellt.

Das Expansionsorgan nach Anspruch 10 beinhaltet charakteristischerweise eine Ventileinheit nach einem der Ansprüche 1 bis 8 dergestalt, daß diese ventilhochdruckseitig an die Kältemittelhochdruckseite der Klimaanlage und ventilniederdruckseitig an die Kältemittelniederdruckseite der Klimaanlage gekoppelt ist. Durch die in der Ventileinheit enthaltenen Ventilkomponenten ermöglicht dieses Expansionsorgan eine zuverlässige, energieverbrauchsgünstige, leistungsbedarfsgerechte und regelungstechnisch einfache Klimaanlagenregelung in den verschiedenen Betriebssituationen gerade auch einer CO₂-Fahrzeugklimaanlage mit den für den Fahrzeugeinsatz typischen Lastschwankungen.

Bei einem nach Anspruch 11 weitergebildeten Expansionsorgan ist das den Durchtrittsquerschnitt einer Festdrossel beeinflussende Regelventil der Ventileinheit mit seiner Niederdruckseite strömungstechnisch, entweder stromaufwärts eines Verdampfers oder zwischen dem Verdampfer und einem Kompressor der Klimaanlage, vor oder hinter einem eventuell vorhandenen inneren Wärmeübertrager, angeordnet.

Vorteilhafte Ausführungsformen der Erfindung sind in den Zeichnungen dargestellt und werden nachfolgend beschrieben. Hierbei zeigen:
- Fig. 1: eine Längsschnittansicht einer Ventileinheit mit Festdrossel und Überdruckventil,
- Fig. 2: eine Längsschnittansicht einer Ventileinheit mit Festdrossel und diese beeinflussendem Regelventil,
- Fig. 3: eine Längsschnittansicht einer Ventileinheit mit Festdrossel, diese beeinflussendem Regelventil und Überdruckventil und
- Fig. 4: eine Längsschnittansicht einer Ventileinheit mit zwei Festdrosseln einem die eine Festdrossel beeinflussendem Regelventil und einem Überdruckventil.

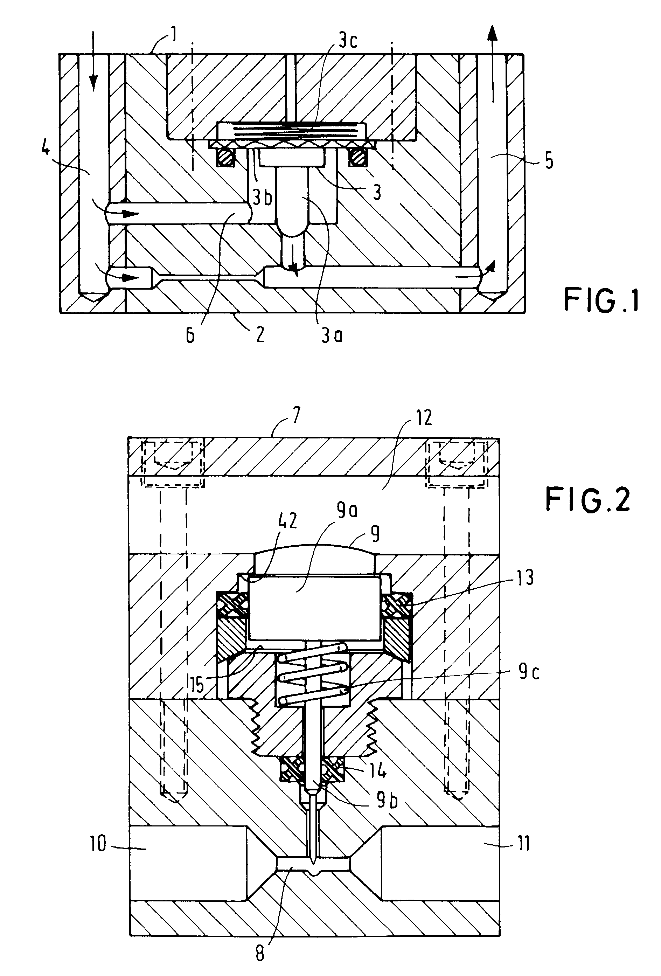

Die in Fig. 1 gezeigte Ventileinheit beinhaltet in einem gemeinsamen Ventilgehäuse 1 eine Festdrossel 2 und ein Überdruckventil 3. Die Festdrossel 2, auch Konstantdrossel oder "Orifice tube" genannt, verbindet eine eingangsseitige Ventilhochdruckseite, repräsentiert durch einen in das Gehäuse 1 eingebrachten Eintrittskanal 4, mit einer Ventilniederdruckseite, repräsentiert durch einen in das Gehäuse 1 eingebrachten Austrittskanal 5, über einen Drosselkanal mit geeignet geringem Durchtrittsquerschnitt, d.h., mit gegenüber dem Durchmesser um eine Vielfaches größerer Länge. Eine solche Festdrossel hat die Eigenschaft, daß sie den Druck auf der Hochdruckseite, oder genauer den Differenzdruck zwischen Hoch- und Niederdruckseite, nur bis zu einem bestimmten, von der Auslegung der Festdrossel abhängigen Maximalwert ansteigen läßt.

Wenn dies wegen übermäßiger Zufuhr des Strömungsmediums nicht mehr möglich ist oder die Festdrossel z.B. wegen Verstopfung ausfällt, verhindert das zu diesem Zweck vorgesehene Überdruckventil 3 einen Druckanstieg auf der Hochdruckseite 4 über einen durch Auslegung des Überdruckventils 3 einstellbaren, zulässigen Wert hinaus. Das Überdruckventil 3 befindet sich dazu in einer die Festdrossel 2 umgehenden Bypassleitung 6, so daß es die Durchströmung der Festdrossel 2 ungestört läßt. Es besteht beispielsweise aus einer beweglichen, auf der einen Seite vom eingangsseitigen Hochdruck beaufschlagten Membran 3b, einer auf der hochdruckabgewandten Seite gegen die Membran druckenden Ventilfeder 3c und einem an der Hochdruckseite der Membran 3b angebrachten Ventilstift 3a, der im gezeigten Ventilnormalzustand die Bypassleitung 6 absperrt. Wenn der Hochdruck, der auf den vom Ventilstift 3a freigelassenen, ringförmigen Teil der Membran als Hochdruckwirkfläche drückt, einen zulässigen Höchstwert zu überschreiten droht, der den Öffnungsdruck für das Überdruckventil 3 darstellt, öffnet das Überdruckventil 3 und sorgt so über die Bypassleitung 6 für den erforderlichen hochdruckseitigen Druckabbau. Das Überdruckventil 3 ist so ausgeführt, daß der Rückdruck, der vom Druck auf der Niederdruckseite auf den Ventilstiftkopf ausgeübt wird, den Öffnungsdruck nur geringfügig beeinflußt. Dies wird durch eine entsprechende Abstimmung dieser niederdruckseitigen Ventilkopf-Wirkfläche und der hochdruckseitigen Membranring-Wirkfläche in Verbindung mit der Ventilfeder 3c erreicht. Für die Funktion des Überdruckventils 3 ist daher im wesentlichen das Kräftegleichgewicht aus der hochdruckseitigen, in Öffnungsrichtung wirkenden Druckkraft und den von der Ventilfeder 3c und der Elastizität der Membran selbst bereitgestellten Gegenkräften verantwortlich. So kann z.B. ein Verhältnis der hochdruckseitigen Wirkfläche zur niederdruckseitigen Wirkfläche in der Größenordnung von 1:10 ein in dieser Hinsicht brauchbares Ergebnis liefern.

Die Ventileinheit von Fig. 1 läßt sich in einem Expansionsorgan einer Fahrzeugklimaanlage, insbesondere einer CO₂-Klimaanlage, einsetzen. Es zeigt sich, daß mit einem solchen Expansionsorgan ein zufriedenstellender Betrieb gerade auch einer CO₂-Klimaanlage oder einer Klimaanlage mit einem anderen Kältemittel erreicht wird, die auf der Hochdruckseite mindestens zeitweise im überkritischen Bereich arbeitet. Die Ventileinheit von Fig. 1 ist dann mit ihrer Eintrittsseite 4 an die Ausgangsseite eines Kondensators oder Gaskühlers oder eines inneren Wärmeübertragers und mit ihrer Austrittsseite 5 an die Eintrittsseite eines Verdampfers der Klimaanlage angeschlossen. Durch ihre Festdrossel 2 sorgt sie in einem in vielen Anwendungsfällen ausreichenden Maß für eine passende Einstellung des Kältemittelhochdrucks in Abhängigkeit vom niederdruckseitigen Kältemitteldruck. Das vom Kondensator/Gaskühler kommende Kältemittel strömt im Normalbetrieb bei geschlossenem Überdruckventil 3 über die Festdrossel 2, wird dort gedrosselt, d.h., entspannt und strömt über die Ventilaustrittsseite 5 zum Verdampfer. Ein zu starkes Ansteigen des Kältemittelhochdrucks wird vom Überdruckventil 3 verhindert, das dann öffnet und zwecks Druckabbau hochdruckseitiges Kältemittel über die Bypassleitung 6 unter Umgehung der Festdrossel 2 zur Niederdruckseite strömen läßt.

Die in Fig. 2 gezeigte Ventileinheit beinhaltet in einem gemeinsamen Gehäuse 7 eine Festdrossel 8 und ein deren Durchtrittsquerschnitt beeinflussendes, mechanisches Regelventil 9. Die Festdrossel 8 befindet sich zwischen einem hochdruckseitigen Eintrittskanal 10 und einem niederdruckseitigen Austrittskanal 11. Zusätzlich kann ein nicht gezeigtes Überdruckventil vorgesehen sein, das in einer die Festdrossel 8 umgehenden Bypassleitung zwischen Ventilhochdruckseite 10 und Ventilniederdruckseite 11 liegt und in das Ventilgehäuse 7 integriert oder als davon eigenständiges Bauteil realisiert sein kann.

Das mechanische Regelventil 9 beinhaltet einen Steuerkolben 9a, der vom Druck eines Mediums beaufschlagt wird, welcher in einem zugehörigen Druckraum herrscht, der von einem das Ventilgehäuse 7 durchsetzenden Strömungskanal 12 gebildet ist. Mit dem druckbetätigbaren Steuerkolben 9a ist eine Ventilnadel 9b verbunden, die mit ihrer Spitze mehr oder weniger weit radial in den Drosselkanal der Festdrossel 8 eingreift und so deren Durchtrittsquerschnitt einstellt. Eine vorgespannte Ventilfeder 9c übt eine zur pneumatischen Druckkraft auf den Steuerkolben 9a entgegengesetzte Gegenkraft aus. Eine weitere, demgegenüber jedoch praktisch vernachlässigbare Gegenkraft wirkt pneumatisch von dem im Drosselkanal der Festdrossel 8 befindlichen Medium auf die Spitze der Ventilnadel 9b. Solange die Gegenkräfte größer als die vom Medium im Strömungskanal 12 ausgeübte Druckkraft sind, wird der Steuerkolben 9a von den Gegenkräften in der gezeigten, von einem gehäuseseitigen Endanschlag 42 definierten Endstellung gehalten. Zur Abdichtung sind eine den Steuerkolben 9a umgebende Ringdichtung 13 und eine die Ventilnadel 9b umgebende Ringdichtung 14 vorgesehen, die gleichzeitig eine bewegungsdämpfende Funktion erfüllen. Die gegenüberliegende Endstellung des Steuerkolbens 9a wird von einem unteren Anschlag 15 definiert, der von einem Ventilkörper des Regelventils 9 bereitgestellt wird, der in einer zugehörigen Gehäusebohrung befestigt, wie gezeigt z.B. eingeschraubt, ist und gleichzeitig zur Führung der Ventilnadel 9b und zur Aufnahme der Ventilfeder 9c dient.

Auch die Ventileinheit von Fig. 2 ist für ein Expansionsorgan einer Klimaanlage verwendbar. Insbesondere eignet sie sich für ein Expansionsorgan einer _{CO2}-Klimaanlage, um mit relativ geringem regelungstechnischem Aufwand den Kältemittelhochdruck möglichst nahe beim Wert für eine maximale Leistungskennzahl COP einzustellen. Bei dieser Verwendung ermöglicht die Ventileinheit neben einem Festdrossel-Normalbetrieb eine Beeinflussung des Kältemittelhochdrucks in Abhängigkeit vom niederdruckseitigen Kältemitteldruck, d.h., vom Saugdruck, durch das Regelventil 9. Hierzu wird der mit dem Regelventil-Steuerkolben 9 in Verbindung stehende Strömungskanal 12, der auch ein Blindkanal sein kann, in die Niederdruckseite der Klimaanlage geschaltet, beispielsweise zwischen Verdampfer und Kompressor, vor oder hinter dem vorzugsweise vorhandenen inneren Wärmeübertrager. Der hochdruckseitige Ventileintrittskanal 10 wird an die Austrittsseite eines Kondensators/Gaskühlers und der niederdruckseitige Ventilaustrittskanal 11 an die Eintrittsseite des Verdampfers angeschlossen.

Im Normalbetrieb der Klimaanlage strömt das Kältemittel dann über den Ventileintrittskanal 10 zur Festdrossel 8, wird dort gedrosselt, d.h., entspannt, und gelangt über den Austrittskanal 11 zum Verdampfer. Der Kältemittel-Saugdruck wirkt im Ventilströmungskanal 12 auf den Steuerkolben 9a. Sobald der Saugdruck einen bestimmten unteren Grenzwert überschreitet, für das Kältemittel CO₂ z.B. einen Wert von 35bar, bewegt sich der Steuerkolben 9a von seinem oberen Anschlag 42 weg, die Ventilfeder 9c wird zusammengedrückt, und die Ventilnadel 9b verschließt einen Teil des freien Festdrosselquerschnitts, so daß der Kältemittelhochdruck ansteigt. Mit steigendem Saugdruck verschließt die Ventilnadel 9b zunehmend den freien Festdrosselquerschnitt, so daß der Kältemittelhochdruck weiter ansteigt. Sobald dann der Saugdruck einen bestimmten oberen Grenzwert, im Fall des Kältemittels CO₂ z.B. einen Wert von 45bar, erreicht, legt sich der Steuerkolben 9a gegen den unteren Endanschlag 15 an. Die Stellung der Ventilnadel 9b ändert sich dann nicht mehr, und damit bleibt auch der Festdrosselquerschnitt im weiteren konstant. Beispielsweise stellt sich für eine bestimmte Anwendung bei einer Kälteleistung von etwa 5kW in dieser Situation ein Kältemittelhochdruck in der Größenordnung von 130bar ein.

Die Ventileinheit von Fig. 2 wirkt somit bis zu einem unteren Saugdruck-Grenzwert als Festdrossel und zwischen dem unteren und dem oberen Grenzwert als ein saugdruckabhängiges Hochdruckregelventil, oberhalb des oberen Saugdruckgrenzwerts wirkt sie wieder als Festdrossel, wobei dieser Betriebszustand schätzungsweise für 90% der Betriebsfälle vorliegt. Mit dieser Regelcharakteristik läßt sich die Klimaanlage mit wenig Regelungsaufwand ausreichend genau auf die Erzielung einer möglichst hohen Kälteleistung und auch Kälteleistungszahl COP einstellen, speziell auch im Fall einer CO₂-Klimaanlage eines Kraftfahrzeuges.

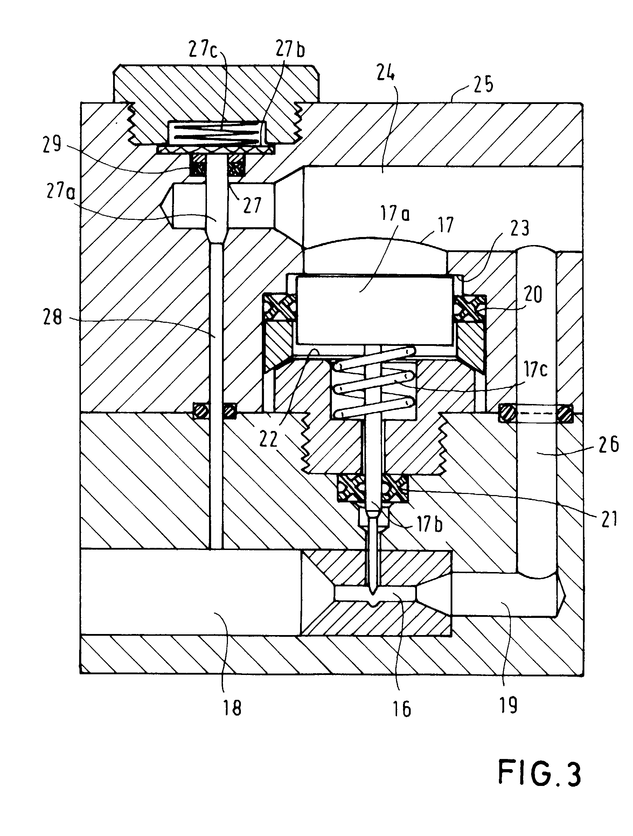

Fig. 3 zeigt eine der Fig. 2 funktionell weitgehend entsprechende Ventileinheit mit einer Festdrossel 16 und einem deren Durchtrittsquerschnitt beeinflussenden Regelventil 17. Die Festdrossel 16 befindet sich wiederum zwischen einem hochdruckseitigen Ventileintrittskanal 18 und einem niederdruckseitigen Ventilaustrittskanal 19. Das mechanische Regelventil 17 ist von einem zu demjenigen von Fig. 2 identischen Aufbau mit einem Steuerkolben 17a, einer Ventilnadel 17b, einer Ventilfeder 17c, Ringdichtungen 20, 21 um den Steuerkolben 17a bzw. die Ventilnadel 17b herum und einem in eine Gehäusebohrung eingesetzten Ventilkörper zur Führung der Ventilnadel 17b und zur Aufnahme der Ventilfeder 17c sowie zur Festlegung eines unteren Endanschlags 22 für den Steuerkolben 17a, der andererseits in der gezeigten, oberen Endstellung gegen einen gehäuseseitigen Anschlag 23 anliegt. Der Steuerkolben 17a steht wiederum mit einem Druckraum in Verbindung, hier einem Anschlußkanal 24, der sich ebenso wie alle übrigen Bestandteile der Ventileinheit in einem gemeinsamen Ventilgehäuse 25 befindet.

Im Unterschied zur Ventileinheit von Fig. 2 steht bei der Ventileinheit von Fig. 3 der von der Festdrossel 16 abgehende Austrittskanal 19 über einen gehäuseinternen Verbindungskanal 26 mit dem Anschlußkanal 24 in Verbindung, dessen dort herrschender Druck des in ihm befindlichen Mediums den Steuerkolben 17a beaufschlagt. Dies bedeutet, daß das mechanische Regelventil 17 direkt mit dem Druck des von der Festdrossel 16 kommenden, entspannten Mediums als Stellgröße beaufschlagt wird. Im übrigen entspricht die Funktionsweise des Regelventils 17 demjenigen von Fig. 2, d.h., je nach dem im Anschlußkanal 24 herrschenden Druck läßt das Regelventil den Festdrossel-Durchtrittsquerschnitt unverändert oder begrenzt ihn in Abhängigkeit vom Anschlußkanaldruck bis auf einen Minimalwert. Des weiteren beinhaltet die Ventileinheit von Fig. 3 ein in das Gehäuse 25 integriertes Überdruckventil 27 mit einem Ventilstift 27a, der im normalen Ventilbetrieb in der gezeigten Lage eine Bypassleitung 28 absperrt, welche den hochdruckseitigen Ventileintrittskanal 18 mit dem Anschlußkanal 24 direkt verbindet. Der Ventilstift 27a ist auf einer Seite einer Ventilmembran 27b angebracht, die sich auf ihrer anderen Seite gegen eine Ventilfeder 27c abstützt. Der Ventilstift 27a ist von einer Ringdichtung 29 umgeben und wird an seinem Kopfende über die Bypassleitung 28 vom Druck des über den Ventileintrittskanal 18 hochdruckseitig zugeführten Mediums beaufschlagt.

Die Ventileinheit von Fig. 3 ist in analoger Weise wie diejenige von Fig. 2 für ein Expansionsorgan insbesondere einer CO₂-Klimaanlage einsetzbar, wobei sie niederdruckseitig mit ihrem Anschlußkanal 24 an die Eintrittsseite des Verdampfers angeschlossen wird, d.h., das mechanische Regelventil 17 ist vom Saugdruck des Kältemittels stromaufwärts des Verdampfers als Stellgröße beaufschlagt. Im übrigen kann zur Funktionsweise eines solchen, die Ventileinheit von Fig. 3 verwendenden Expansionsorgans auf die entsprechenden obigen Ausführungen zu Fig. 2 verwiesen werden. In beiden Ausführungsbeispielen der Fig. 2 und 3 können Schwingungsneigungen des mechanischen Regelventils 9, 17 sowohl durch das Dämpfungsverhalten der zugehörigen Ringdichtungen 13, 14 bzw. 20, 21 als auch durch geeignete Wahl der Federcharakteristik der zugehörigen Ventilfeder 9c, 17c ausreichend gering gehalten werden.

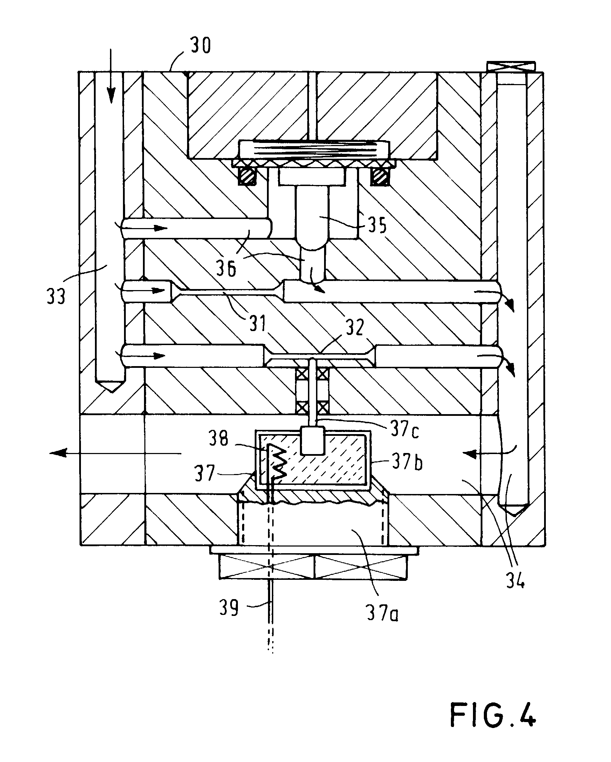

Fig. 4 zeigt eine weitere, für ein Klimaanlagen-Expansionsorgan verwendbare Ventileinheit. Diese Ventileinheit besitzt in einem gemeinsamen Gehäuse 30 eine erste Festdrossel 31 und eine zweite Festdrossel 32, die parallel zwischen einem hochdruckseitigen Eintrittskanal 33 und einem niederdruckseitigen Austrittskanal 34 angeordnet sind, ein Überdruckventil 35 in einer die beiden Festdrosseln 31 umgehenden Bypassleitung 36 und ein thermisches Regelventil 37, das den Durchtrittsquerschnitt der zweiten Festdrossel 32 beeinflußt. Das Überdruckventil 35 entspricht in Aufbau und Funktionsweise vollständig demjenigen von Fig. 1, worauf verwiesen werden kann.

Das thermische Regelventil 37 beinhaltet einen Grundkörper 37a, der einen Dehnstoffbehälter 37b trägt. Der Dehnstoffbehälter 37b befindet sich im niederdruckseitigen Austrittskanal 34 der Ventileinheit und ist mit einem geeigneten Fluid, wie einer wachsartigen Substanz, befüllt, das die Temperatur des niederdruckseitigen Mediums im Austrittskanal 34 annimmt. Diese Temperatur bestimmt als Stellgröße über den Volumenausdehnungskoeffizienten des Fluids im Dehnstoffbehälter 37b die Lage einer beweglich an den Dehnstoffbehälter 37b angekoppelten Ventilnadel 37c, die je nach Stellung den Durchtrittsquerschnitt der zweiten Festdrossel 32 völlig freiläßt oder variabel bis zum völligen Schließen begrenzt und dadurch den sich im Ventileintrittskanal 32 einstellenden Hochdruck beeinflußt.

Des weiteren ist für das thermische Regelventil 37 ein elektrisches Heizelement 38, z.B. ein PTC-Element, im Dehnstoffbehälter 37b vorgesehen, das über Heizleitungen 39 bestromt werden kann, die aus dem Dehnstoffbehälter 37b und durch den Regelventil-Grundkörper 37a hindurch zur Außenseite des Gehäuses 30 der Ventileinheit geführt sind. Dadurch kann das thermische Regelventil 37 extern angesteuert und somit in ein extern vorgegebenes Regelkonzept eingebunden werden. In diesem Fall dient neben der Temperatur des Mediums im Ventilaustrittskanal 34 der Heizstrom bzw. die diesen bestimmende physikalische Größe als Stellgröße für die Einstellung des thermischen Regelventils 37.

Die Ventileinheit von Fig. 4 eignet sich wiederum insbesondere auch für ein Expansionsorgan einer CO₂-Fahrzeugklimanlage. In diesem Einsatzfall ist die Ventileinheit mit ihrem Eintrittskanal 33 hochdruckseitig an den Ausgang des Gaskühlers oder des inneren Wärmeübertragers und mit ihrem Austrittskanal 34 an die Niederdruckseite des CO₂-Kältemittelkreislaufs vor oder nach dem Verdampfer angekoppelt.

Im Normalbetrieb strömt dann das Kältemittel vom Gaskühler oder dem inneren Wärmeübertrager in den Eintrittskanal 33 der Ventileinheit, wird über die beiden parallelen Festdrosseln 31, 32 entspannt und strömt über den Austrittskanal 34 zum Verdampfer. Die Kältemittelströmung durch die Ventileinheit ist durch entsprechende Pfeile symbolisiert. Das Überdruckventil 35 schützt vor einem zu hohen Kältemitteldruck auf der Hochdruckseite. Mit Hilfe des thermischen Regelventils 37 läßt sich der Kältemittelhochdruck mit relativ geringem regelungstechnischem Aufwand in den verschiedenen Anlagenbetriebszuständen so einstellen, daß die Leistungskennzahl COP oder die Kälteleistung möglichst nahe bei ihrem Maximalwert liegt. Dabei wird der Kältemittelhochdruckwert zum einen von der niederdruckseitigen Temperatur des zum Verdampfer geleiteten, entspannten Kältemittels beeinflußt, indem sich der Dehnstoffbehälter 37b in diesem Kältemittelstrom befindet. Die Temperatur, die das Fluid in dem Dehnstoffbehälter 37b annimmt, entspricht der Sättigungstemperatur des Kältemittels beim entsprechenden Druck. Mit steigendem niederdruckseitigem Kältemitteldruck, d.h., Saugdruck, und damit steigender Temperatur des Dehnstoffs verschließt die Ventilnadel 37c zunehmend den freien Drosselquerschnitt der zweiten Festdrossel 32, so daß der Hochdruck ansteigt. Sobald der Saugdruck einen bestimmten oberen Grenzwert von z.B. 45bar erreicht hat, ist die zweite Festdrossel 32 geschlossen, während über die andere Festdrossel 31 weiterhin das hochdruckseitige Kältemittel gedrosselt zur Niederdruckseite strömen kann. Die Stellung der Ventilnadel 37c ändert sich dann bei weiter ansteigendem Saugdruck nicht mehr, und es stellt sich für einen beispielhaften Auslegungsfall bei einer bestimmten Kälteleistung von z.B. 5kW ein zugehöriger Hochdruckwert von z.B. 130bar ein.

Über den Dehnstoffbehälter 37b dient somit die niederdruckseitige Kältemitteltemperatur und damit indirekt wiederum der mit ihr zusammenhängende Saugdruck als eine Stellgröße zur Regelung des Kältemittelhochdrucks. Zusätzlich kann der Heizstrom für das Heizelement 38 über die externen Heizleitungen 39 bzw. eine ihn bestimmende physikalische Größe als weitere Stellgröße dieser Regelung dienen. Hierfür kommt beispielsweise die Fahrzeugumgebungstemperatur oder die Drehzahl des Fahrzeugmotors in Betracht, wobei dann ein jeweils von einer oder beiden dieser Größen abhängiges Heizstromsignal erzeugt wird. So kann beispielsweise eine zweistufige Regelung in Abhängigkeit von der Motordrehzahl vorgesehen sein, bei der das thermische Regelventil 37 und damit das Expansionsorgan insgesamt für einen Bereich niedrigerer Motordrehzahlen anders eingestellt wird als für einen Bereich hoher Motordrehzahlen, wodurch berücksichtigt wird, daß die Motordrehzahl unter anderem auch die Leistung des Klimaanlagenkompressors bestimmt. Schwingungsneigungen des thermischen Regelventils 37, wie sie unter bestimmten Bedingungen beim Betrieb der Klimaanlage auftreten können, kann durch geeignete Wahl der Eigenschaften des verwendeten Dehnstoffs im Dehnstoffbehälter 37b entgegengewirkt werden.

Alternativ zur beschriebenen Einbringung in den Kältemittelströmungsabschnitt vor dem Verdampfer kann der Dehnstoffbehälter 37b des thermischen Regelventils 37 in dem Kältemittelströmungsabschnitt stromabwärts des Verdampfers angeordnet sein. In diesem Fall wird eine Ventileinheit verwendet, die gegenüber derjenigen von Fig. 4 dahingehend modifiziert ist, daß entsprechend der Ventileinheit von Fig. 2 der das Regelventil 37 beeinflussende Kältemittelströmungskanal von dem an die Festdrosseln 31, 32 angekoppelten Austrittskanal getrennt gehalten wird. Der Austrittskanal wird dann an die Verdampfereintrittsseite angekoppelt, während der das thermische Regelventil 37 beeinflussende Kältemittelströmungskanal der Ventileinheit in den Kältemittelströmungsabschnitt zwischen Verdampfer und Kompressor eingeschaltet wird.

Es versteht sich, daß neben den gezeigten Beispielen weitere Realisierungen des erfindungsgemäßen Expansionsorgans und der erfindungsgemäßen Ventileinheit realisierbar sind. So kann z.B. ein Expansionsorgan vorgesehen sein, das als maßgebliches Drosselelement ein reines Regelventil ohne Festdrosseleigenschaft beinhaltet, welches vom Saugdruck oder einer mit ihm in Beziehung stehenden anderen physikalischen Größe als Stellgröße zwecks Regelung des Hochdrucks beaufschlagt ist.

## Patentansprüche

1. Ventileinheit, insbesondere zur Verwendung für ein Expansionsorgan einer Klimaanlage, mit
- einer Festdrossel (2, 8) zwischen einer Ventilhochdruckseite (4, 10) und einer Ventilniederdruckseite (5, 11),
**dadurch gekennzeichnet,** daß
- wenigstens eine weitere Ventilkomponente in Form eines Überdruckventils (3), das in einer die Festdrossel (2, 8) umgehenden Bypassleitung (6) angeordnet ist, oder eines den Durchtrittsquerschnitt der Festdrossel beeinflussenden Regelventils (9).

2. Ventileinheit nach Anspruch 1,
**dadurch gekennzeichnet,** daß
- sie wenigstens zwei parallele Festdrosseln (31, 32) zwischen der Ventilhochdruckseite (33) und der Ventilniederdruckseite (34) aufweist.

3. Ventileinheit nach Anspruch 2,
dadurch gekennzeichnet,
- durch ein Überdruckventil (35), das in einer die Festdrosseln (31, 32) umgehenden Bypassleitung (36) angeordnet ist, und ein den Durchtrittsquerschnitt einer der Festdrosseln beeinflussendes Regelventil (37).

4. Ventileinheit nach einem der Ansprüche 1 bis 3,
**dadurch gekennzeichnet,** daß
- alle Ventilkomponenten in ein gemeinsames Ventilgehäuse (30) integriert sind.

5. Ventileinheit nach einem der Ansprüche 1 bis 4,
**dadurch gekennzeichnet,** daß
- das Regelventil ein mechanisches Regelventil (9) ist, das vom Druck eines niederdruckseitigen Mediums als Stellgröße beaufschlagt wird.

6. Ventileinheit nach einem der Ansprüche 1 bis 4,
**dadurch gekennzeichnet,** daß
- Regelventil ein thermisches Regelventil (37) ist, das von der Temperatur eines niederdruckseitigen Mediums als Stellgröße beaufschlagt wird.

7. Ventileinheit nach einem der Ansprüche 1 bis 6,
**dadurch gekennzeichnet**, daß
- das Regelventil ein thermisches Regelventil (37) ist, dessen Stellung durch ein extern beheizbares Heizelement (38) steuerbar ist.

8. Ventileinheit nach einem der Ansprüche 5 bis 7,
**dadurch gekennzeichnet,** daß
- das Regelventil (17) niederdruckseitig über eine ventilgehäuseinterne Verbindungsleitung (26) mit der Ventilniederdruckseite (19) in Verbindung steht.

9. Expansionsorgan für eine Klimaanlage mit einer Kältemittel-Hochdruckseite stromaufwärts des Expansionsorgans und einer Kältemittel-Niederdruckseite stromabwärts des Expansionsorgans, insbesondere für eine CO₂-Klimaanlage, mit
- einem den Strömungsquerschnitt des Kältemittels von der Hochdruckseite zur Niederdruckseite in Abhängigkeit von einer einwirkenden Stellgröße einstellenden Regelventil,
**dadurch gekennzeichnet, daß**
- das Regelventil vom Kältemitteldruck auf der Niederdruckseite oder einer damit in Beziehung stehenden physikalischen Größe als Stellgröße beaufschlagbar ist.

10. Expansionsorgan für eine Klimaanlage mit einer Kältemittel-Hochdruckseite stromaufwärts des Expansionsorgans und einer Kältemittel-Niederdruckseite stromabwärts des Expansionsorgans, insbesondere für eine CO₂-Klimaanlage,
**dadurch gekennzeichnet,** durch
- eine Ventileinheit nach einem der Ansprüche 1 bis 8, die ventilhochdruckseitig an einen Kondensator oder Gaskühler oder inneren Wärmeübertrager der Klimaanlage und ventilniederdruckseitig an einen niederdruckseitigen Kältemittelströmungsabschnitt der Klimaanlage ankoppelbar ist.

11. Expansionsorgan nach Anspruch 10,
**dadurch gekennzeichnet,** daß
- die Ventileinheit über ein das den Durchtrittsquerschnitt der Festdrossel beeinflussendes Regelventil verfügt und das Regelventil mit seiner Niederdruck-Steuerseite strömungstechnisch entweder zwischen dem Expansionsorgan und einem Verdampfer der Klimaanlage oder zwischen dem Verdampfer und einem Kompressor der Klimaanlage, insbesondere vor oder nach einem optional vorhandenen inneren Wärmeübertrager, angeordnet ist.
